# FASCICULE DE BREVET EUROPEEN

(11) **EP 3 017 171 B1**
(45) Date de publication et mention de la délivrance du brevet: **14.06.2017**
(21) Numéro de dépôt: 14790128.4
(22) Date de dépôt: 01.07.2014
(51) Int. Cl.: F02K 1/72

(54) **INVERSEUR DE POUSSÉE D'UNE NACELLE DE TURBORÉACTEUR, COMPRENANT DES GRILLES PARTIELLEMENT INTÉGRÉES DANS LES CAPOTS**
TURBOFAN SCHUBUMKEHRVORRICHTUNG MIT TEILWEISE IN DIE BEWEGLICHE VERKLEIDUNG INTEGRIERTEN KASKADEN
TURBOFAN ENGINE NACELLE THRUST REVERSER COMPRISING CASCADES PARTIALLY INTEGRATED INTO THE MOVING COWL

(30) Priorité: 01.07.2013 FR 1356375
(43) Date de publication de la demande: 11.05.2016
(73) Titulaire: Safran Nacelles, 76700 Gonfreville-l'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2014/051688
(87) Numéro de publication internationale: WO 2015/001250

(56) Documents cités:
- EP-A2- 2 551 506
- WO-A1-2011/135238
- WO-A2-2012/010774
- US-A- 5 228 641

## Description

La présente invention concerne un inverseur de poussée pour une nacelle d'aéronef prévue pour recevoir un turboréacteur, ainsi qu'une nacelle d'aéronef équipée d'un tel inverseur de poussée.

Les ensembles de motorisation pour les aéronefs comportent une nacelle formant une enveloppe extérieure globalement circulaire, comprenant à l'intérieur un turboréacteur disposé suivant l'axe longitudinal de cette nacelle.

Le turboréacteur reçoit de l'air frais venant du côté amont ou avant, et rejette du côté aval ou arrière les gaz chauds issus de la combustion du carburant, qui donnent une certaine poussée. Pour les turboréacteurs à double flux, des aubes de soufflante disposées autour de ce turboréacteur génèrent un flux secondaire important d'air froid le long d'une veine annulaire passant entre le moteur et la nacelle, qui ajoute une poussée élevée.

Certaines nacelles comportent un système d'inversion de poussée qui ferme au moins en partie la veine annulaire d'air froid, et rejette le flux secondaire vers l'avant afin de générer une poussée de freinage de l'aéronef.

Un type d'inverseur de poussée connu, présenté notamment par le document US-A-5228641, comporte des grilles fixées au cadre avant, qui sont intégrées dans l'épaisseur des capots mobiles quand l'inverseur est fermé. Les volets disposés en dessous des grilles, comportent une extrémité avant reliée au capot mobile par une articulation, et une extrémité arrière reliée par une biellette partant vers l'arrière à un bras de liaison qui revient vers l'avant afin d'être fixé sur le cadre avant.

Le recul des capots mobiles entraîne une bascule des biellettes et de leurs volets, qui descendent dans la veine annulaire afin de la fermer.

Ce type d'inverseur comprenant les grilles et les volets avec leurs systèmes de commande, intégrés dans les capots mobiles quand l'inverseur est fermé, posent des problèmes d'encombrement qui nécessitent de limiter les dimensions des grilles pour pouvoir les insérer dans ces capots, ou de prévoir une épaisseur plus importante des capots. La performance aérodynamique des grilles ou le profilage des capots n'est pas optimisée.

Dans les documents WO 2012/010774, EP 2 551 506 et WO 2001/135238, encore d'autres inverseurs de poussée sont décrits. La présente invention a notamment pour but d'éviter les inconvénients de la technique antérieure.

Elle propose à cet effet un inverseur de poussée d'une nacelle de turboréacteur, selon la revendication 1, comprenant des capots mobiles qui reculent par rapport à un cadre avant sous l'effet d'un système actionnement, en entraînant par un mécanisme de commande le basculement de volets pour fermer sensiblement la veine annulaire d'air froid, et en ouvrant des grilles disposées autour de cette veine qui reçoivent le flux d'air froid pour le renvoyer vers l'avant, remarquable en ce que l'inverseur étant fermé les grilles sont partiellement intégrées dans les capots, et en ce qu'il comporte un système d'actionnement qui fait reculer les grilles suivant une course réduite par rapport à celle du capot.

Un avantage de cet inverseur de poussée est que les grilles étant seulement en partie intégrées dans les capots mobiles, une épaisseur radiale réduite des capots est suffisante pour recevoir à l'intérieur cette partie des grilles, ainsi que les volets comprenant leurs mécanismes de commande.

De plus en liant le mécanisme de commande à la fois aux capots et aux grilles, on peut utiliser le mouvement relatif entre ces deux éléments pour actionner les volets, ce qui permet d'intégrer au mieux ce mécanisme dans le capot en évitant d'avoir un élément qui traverse le flux d'air froid pour prendre appui sur la structure interne fixe.

L'inverseur de poussée selon l'invention peut comporter de plus une ou plusieurs des caractéristiques suivantes, qui peuvent être combinées entre elles.

Avantageusement, chaque volet est relié aux grilles par un pivot de guidage.

Avantageusement, chaque volet est relié à un capot par une biellette comprenant des articulations à ses extrémités. De cette manière on réalise un mécanisme de commande de basculement qui est simple et efficace.

En particulier, la grille se trouvant au-dessus d'un volet, peut comporter une patte tournée radialement vers l'intérieur qui dépasse dans la veine annulaire, se terminant par le pivot de guidage, l'articulation avant de la biellette étant disposée radialement vers l'extérieur de ce pivot de guidage quand l'inverseur est fermé.

Avantageusement, l'articulation arrière de la biellette est fixée sur un support qui peut se séparer du capot par un mouvement radial vers l'extérieur de ce capot. On peut ainsi de manière simple et rapide, ouvrir le capot sans avoir à le détacher du mécanisme de commande.

En particulier, le support est lié au capot par un téton de positionnement disposé radialement, qui s'emboîte dans un creux correspondant.

En variante, la liaison entre le support et le capot peut comporter un système de glissières coulissant radialement, qui maintient en permanence un contact entre ces deux éléments lors de l'ouverture du capot.

Avantageusement, le cadre avant comporte des joints d'étanchéité au dessus et en dessous du passage des grilles, tournés vers l'arrière, qui reçoivent l'appui de faces planes correspondantes fixées à ces grilles quand l'inverseur de poussée est fermé. On améliore ainsi le rendement en flux direct en limitant les fuites de flux à cette jonction.

Avantageusement, le système d'actionnement réalise deux courses différentes du capot et des grilles qui sont proportionnelles. De cette manière on obtient bien une course réduite de la grille par rapport au capot.

Avantageusement, le système d'actionnement comporte deux vérins mécaniques du type vis-écrou, qui donnent deux courses différentes à partir d'un entraînement par une même motorisation. On peut utiliser ainsi une unique motorisation pour obtenir ces deux courses différentes.

Le système d'actionnement peut comporter un arbre motorisé entraînant deux couples de pignons coniques, qui font tourner chacun une vis des deux vérins disposés parallèlement. Cette disposition permet d'avoir deux vérins de construction similaire, comportant des courses différentes.

En variante, le système d'actionnement peut comporter deux vérins mécaniques concentriques, comprenant une même vis disposant d'un filetage extérieur et d'un filetage intérieur dans un alésage, pour actionner chaque vérin. Cette disposition permet d'avoir un ensemble de deux vérins très compact.

Avantageusement, l'inverseur de poussée comporte une motorisation entraînant plusieurs systèmes d'actionnement répartis sur le pourtour de la nacelle, par un arbre flexible. On réalise ainsi une parfaite synchronisation entre les différents vérins répartis autour de la nacelle avec une unique motorisation qui est économique.

L'invention a aussi pour objet une nacelle de turboréacteur disposant d'un inverseur de poussée comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma en demi-coupe axiale d'un inverseur selon l'invention, qui est en position fermée ;
- la figure 2 est un schéma en demi-coupe axiale de cet inverseur qui est en position d'inversion ;
- la figure 3 est un schéma en demi-coupe axiale de cet inverseur, présentant une ouverture latérale du capot pour des opérations de maintenance ;
- la figure 4 présente un premier type de système d'actionnement pour cet inverseur ; et
- la figure 5 présente un deuxième type de système d'actionnement pour cet inverseur.

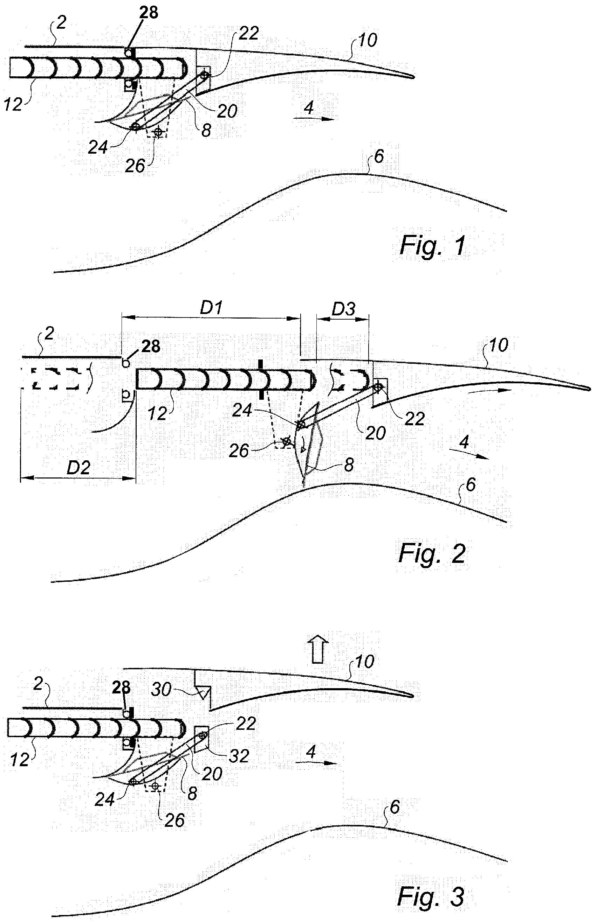

La figure 1 présente la partie arrière d'une nacelle de turboréacteur, comprenant un cadre avant 2 fixé sur la structure se trouvant en amont de cette partie, et des capots mobiles 10 ajustés en arrière de ce cadre.

La partie arrière de la nacelle est recouverte par deux capots mobiles 10, formant chacun dans un plan transversal un demi-cercle. Chaque capot 10 est guidé axialement par des moyens de guidage longitudinaux, qui permettent un coulissement vers l'arrière sous l'effet d'actionneurs non représentés, prenant appui sur la structure fixe lié au cadre avant 2.Les capots 10 comportent un système de verrouillage en position fermée, qui n'est pas représenté.

En variante, la nacelle peut comporter un unique capot mobile 10 formant dans un plan transversal un anneau, qui de la même manière coulisse vers l'arrière pour ouvrir l'inverseur de poussée.

La veine annulaire secondaire 4 comporte un contour radialement externe comprenant des volets 8 ajustés sur la surface intérieure des capots mobiles 10, de manière à former une continuité aérodynamique, et un contour radialement interne formé par la structure interne fixe 6.

Des grilles 12 disposées à plat autour de la veine annulaire 4, forment une couronne comprenant quand l'inverseur est fermé une plus grande partie amont intégrée dans le cadre avant 2, et une plus petite partie aval intégrée dans un logement situé dans la partie avant des capots 10.Les grilles peuvent coulisser vers l'arrière à travers des ouvertures du cadre avant 2.

Les actionneurs de l'inverseur de poussée, qui peuvent être hydraulique, électrique ou pneumatique, réalisent simultanément comme présenté figure 2, une grande course D1 de recul des capots 10 de manière à les ouvrir entièrement, et une plus petite course D2 de recul des grilles 12 de manière à les sortir entièrement du cadre avant 2. On obtient alors une course relative D3 de recul de la grille 12 par rapport au capot 10, qui est égale à la différence entre les courses D1 et D2.

La grille 12 se trouvant au-dessus d'un volet 8, comporte une patte tournée radialement vers l'intérieur qui dépasse dans la veine annulaire 4, se terminant par un pivot de guidage 26 de ce volet pour lui permettre de basculer en partant vers l'arrière.

Pour chaque volet 8, le mécanisme de basculement comporte une biellette 20 comprenant à l'arrière une articulation 22 fixée à l'intérieur du capot 10, juste en arrière du logement recevant les grilles 12, et à l'avant une articulation 24 fixée à ce volet en un point en avant et un peu au-dessus du pivot de guidage 26, l'inverseur de poussée étant fermé.

De cette manière quand le capot 10 recule, la course relative D3 entre ce capot et la grille 12 provoque une traction de la biellette 20 sur le volet 8 par son articulation avant 24, en faisant basculer ce volet autour de son pivot de guidage 26. En fin de course du capot 10, la course relative D3 a disposé les volets 8 sensiblement verticalement afin de fermer en grande partie la veine annulaire 4, ces volets renvoient le flux d'air radialement vers l'extérieur à travers les grilles 12 qui dirigent ce flux vers l'avant.

On réalise ainsi un mécanisme fiable et économique, ne comportant pas de moyen traversant entièrement la veine annulaire 4, et qui dépasse peu dans cette veine avec une bonne intégration dans le capot 10, réalisant de manière simple le basculement des volets 8.

Le cadre avant 2 comporte au dessus et en dessous du passage des grilles 12, un joint d'étanchéité annulaire 28 tourné vers l'arrière faisant le tour de la nacelle, qui reçoit l'appui quand l'inverseur de poussée est fermé, de deux faces planes correspondantes fixées au dessus et en dessous de ces grilles.

La figure 3 présente l'articulation arrière 22 de la biellette 20 liée à un support 32 comprenant un creux recevant un téton de positionnement 30 fixé au capot 10 et tourné radialement vers l'intérieur, ce téton pouvant coulisser par rapport à ce support uniquement suivant la direction radiale. De cette manière le support 32 lié au système d'actionnement, entraîne par son téton 30 le capot 10 lorsqu'il recule pour ouvrir l'inverseur de poussée, mais par contre se désolidarise du capot lorsque ce capot est ouvert en pivotant radialement vers l'extérieur, afin de réaliser des opérations de maintenance dans la nacelle.

On réalise ainsi de manière simple une liaison entre les capots 10 qui peuvent s'ouvrir, et les mécanismes d'actionnement des volets 8 qui restent en position lors de cette ouverture.

En variante, la liaison entre le support 32 et le capot 10 peut comporter un système de glissières coulissant radialement, qui maintient en permanence un contact entre ces deux éléments lors de l'ouverture du capot.

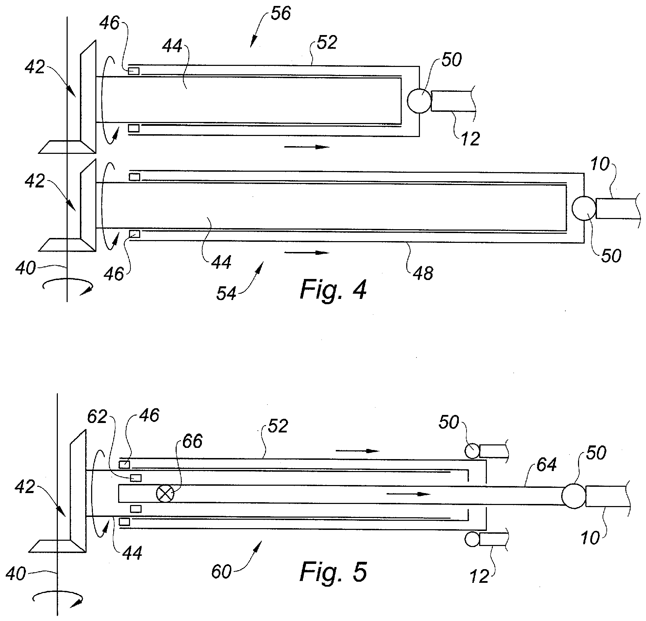

La figure 4 présente un système d'actionnement permettant de déplacer de manière synchronisée le support 32 lié aux capots 10 par un premier vérin 54 ainsi que les grilles 12 par un deuxième vérin 56, comprenant un arbre en rotation 40 entraîné par une motorisation qui peut être électrique, hydraulique ou pneumatique.

Pour le premier vérin 54, l'arbre motorisé 40 entraîne par un premier couple de pignons coniques 42, une vis 44 qui reçoit sur son filetage extérieur un écrou 46 lié à un manchon long 48 entourant cette vis, qui est bloqué en rotation. La rotation de la vis 44 entraîne un déplacement axial de l'écrou 46, et du manchon long 48 qui comporte à son extrémité opposée au couple de pignons 42, une liaison 50 reliée aux capots 10.

De la même manière pour le deuxième vérin 56, l'arbre motorisé 40 entraîne aussi par un deuxième couple de pignons coniques 42, une vis 44 comprenant sur son filetage extérieur un écrou 46 lié à un manchon court 52 entourant cette vis, qui est bloqué en rotation. Ce manchon court 52 comporte à son extrémité opposée au couple de pignons 42, une liaison 50 reliée aux grilles 12.

Avantageusement les liaisons 50 comportent des degrés de liberté, afin de ne pas réaliser un montage hyperstatique mettant des contraintes mécaniques élevées dans les composants.

Avantageusement les systèmes vis-écrou comportent à l'intérieur de chaque écrou 46 des éléments roulants sur le filetage de la vis 44, comme des billes ou des cylindres, afin d'obtenir une liaison sans jeu, comprenant peu de frottement et disposant d'un rendement élevé.

On réalise ainsi par ce système vis-écrou des vérins mécaniques 54, 56 simples et efficaces, transformant le mouvement de rotation d'une même motorisation en deux translations comprenant des courses différentes qui sont proportionnelles.

Pour réaliser les courses différentes des deux vérins, on peut disposer un couple de pignons coniques 42 sur le deuxième vérin 56 qui comporte une démultiplication plus élevée que pour le premier vérin 54, afin de faire tourner sa vis 44 plus lentement. On peut aussi utiliser une vis 44 comportant un pas réduit, qui donne un déplacement axial de l'écrou 46 inférieur pour une même rotation de cette vis.

En particulier on peut avoir une unique motorisation reliée à un arbre flexible 40, qui entraîne différents systèmes d'actionnement répartis sur le pourtour de la nacelle, afin de faire coulisser de manière synchronisée l'ensemble des capots 10 et des grilles 12.

La figure 5 présente un vérin double 60 comprenant deux vérins concentriques, disposant d'une même vis 44 entraînée par un unique couple de pignons coniques 42 motorisé par un arbre 40.

La vis 44 comporte un filetage extérieur recevant un écrou extérieur 46 fixé au manchon extérieur court 52, disposant à son extrémité d'une liaison 50 reliée aux grilles 12.

La vis 44 est creuse, elle comporte un filetage intérieur recevant un écrou intérieur 62 fixé à une tige longue 64, disposant à son extrémité opposée au couple de pignons 42, d'une liaison 50 reliée aux capots 10. Le manchon extérieur court 52 ainsi que la tige longue 64, sont bloqués en rotation.

De la même manière la course du manchon court 52 est plus faible que celle de la tige longue 64 pour une même rotation de la vis creuse 44, grâce à deux pas différents sur les filetages intérieur et extérieur de cette vis.

En complément la tige 64 peut comporter sur sa partie intégrée dans la vis 44, un accouplement 66 donnant un petit degré de liberté afin d'éviter un montage hyperstatique de cette tige générant des contraintes importantes.

On réalise ainsi un système d'actionnement très compact, pouvant comporter aussi un bon rendement grâce à des écrous 46, 62 comportant des éléments roulants.

D'une manière générale, une estimation pour l'inverseur de poussée selon l'invention donne une réduction de la masse de la nacelle d'environ 50kg et de la consommation d'environ 0,3%. L'élimination de bielles traversant le flux annulaire d'air froid 4 pour manoeuvrer les volets 8, donne aussi une réduction de la consommation d'environ 0,1%.

Par ailleurs l'inverseur de poussée selon l'invention permet d'adopter facilement un capot 10 unique disposant d'un contour annulaire fermé, au lieu de deux demi-capots, ce qui permet de réduire la masse de la nacelle d'environ 150kg et la consommation d'environ 1%.

## Revendications

1. - Inverseur de poussée d'une nacelle de turboréacteur, comprenant des capots mobiles (10) qui reculent par rapport à un cadre avant (2) sous l'effet d'un système d'actionnement, en entraînant par un mécanisme de commande le basculement de volets (8) pour fermer sensiblement la veine annulaire d'air froid (4), et en ouvrant des grilles (12) disposées autour de cette veine qui reçoivent le flux d'air froid pour le renvoyer vers l'avant, l'inverseur étant fermé les grilles (12) sont partiellement intégrées dans les capots (10), et l'inverseur comportant un système d'actionnement qui fait reculer les grilles suivant une course réduite par rapport à celle du capot, **caractérisé en ce que** chaque volet (8) est relié aux grilles (12) par un pivot de guidage (26).

2. - Inverseur de poussée selon la revendication 1, **caractérisé en ce que** chaque volet (8) est relié à un capot (10) par une biellette (20) comprenant des articulations (22, 24) à ses extrémités.

3. - Inverseur de poussée selon le revendication 2, **caractérisé en ce que** la grille (12) se trouvant au-dessus d'un volet (8), comporte une patte tournée radialement vers l'intérieur qui dépasse dans la veine annulaire (4),se terminant par le pivot de guidage (26), l'articulation avant (24) de la biellette (20) étant disposée radialement vers l'extérieur de ce pivot de guidage quand l'inverseur est fermé.

4. - Inverseur de poussée selon la revendication 2 ou 3, **caractérisé en ce que** l'articulation arrière (22) de la biellette (20) est fixée sur un support (32) qui peut se séparer du capot (10) par un mouvement radial vers l'extérieur de ce capot.

5. - Inverseur de poussée selon la revendication 4, **caractérisé en ce que** le support (32) est lié au capot (10) par un téton de positionnement (30) disposé radialement, qui s'emboîte dans un creux correspondant.

6. - Inverseur de poussée selon la revendication 4, **caractérisé en ce que** la liaison entre le support (32) et le capot (10) comporte un système de glissières coulissant radialement, qui maintient en permanence un contact entre ces deux éléments lors de l'ouverture du capot.

7. - Inverseur de poussée selon l'une quelconque des revendications précédentes, **caractérisé en ce que** le cadre avant (2) comporte des joints d'étanchéité (28) au dessus et en dessous du passage des grilles (12), tournés vers l'arrière, qui reçoivent l'appui de faces planes correspondantes fixées à ces grilles quand l'inverseur de poussée est fermé.

8. - Inverseur de poussée selon l'une quelconque des revendications précédentes, **caractérisé en ce que** le système d'actionnement réalise deux courses différentes du capot (10) et des grilles (12) qui sont proportionnelles.

9. - Inverseur de poussée selon la revendication 8, **caractérisé en ce que** le système d'actionnement comporte deux vérins mécaniques du type vis-écrou (54, 56), qui donnent deux courses différentes à partir d'un entraînement par une même motorisation (40).

10. - Inverseur de poussée selon la revendication 9, **caractérisé en ce que** le système d'actionnement comporte un arbre motorisé (40) entraînant deux couples de pignons coniques (42), qui font tourner chacun une vis (44) des deux vérins (54, 56) disposés parallèlement.

11. - Inverseur de poussée selon la revendication 9, **caractérisé en ce que** le système d'actionnement comporte deux vérins mécaniques concentriques (60), comprenant une même vis (44) disposant d'un filetage extérieur et d'un filetage intérieur dans un alésage, pour actionner chaque vérin.

12. - Inverseur de poussée selon l'une quelconque des revendications précédentes, **caractérisé en ce qu'**il comporte une motorisation entraînant plusieurs systèmes d'actionnement répartis sur le pourtour de la nacelle, par un arbre flexible (40).

13. - Nacelle de turboréacteur disposant d'un inverseur de poussée, **caractérisée en ce que** cet inverseur est réalisé selon l'une quelconque des revendications précédentes.

## Patentansprüche

1. Schubumkehrvorrichtung einer Turbostrahltriebwerksgondel, umfassend bewegliche Verkleidungen (10), die mit Bezug auf einen vorderen Rahmen (2) unter der Einwirkung eines Betätigungssystems zurückweichen, indem durch einen Steuermechanismus das Kippen von Klappen (8) angetrieben wird, um im Wesentlichen die runde Leitung von Kaltluft (4) zu schließen und Kaskaden (12) geöffnet werden, die um diese Leitung angeordnet sind, die den Fluss von Kaltluft aufnehmen, um ihn wieder nach vorne zu schicken, wobei bei geschlossener Umkehrvorrichtung die Kaskaden (12) teilweise in die Verkleidungen (10) integriert sind und die Umkehrvorrichtung ein Betätigungssystem aufweist, das die Kaskaden gemäß einem Weg zurückweichen lässt, der mit Bezug auf denjenigen der Verkleidungen reduziert ist, **dadurch gekennzeichnet, dass** jede Klappe (8) mit den Kaskaden (12) durch einen Führungsdrehpunkt (26) verbunden ist.

2. Schubumkehrvorrichtung nach Anspruch 1, **dadurch gekennzeichnet, dass** jede Klappe (8) mit einer Verkleidung (10) durch eine Schubstange (20) verbunden ist, die an ihren Enden Gelenke (22, 24) umfasst.

3. Schubumkehrvorrichtung nach Anspruch 2, **dadurch gekennzeichnet, dass** die Kaskade (12), die sich über einer Klappe (8) befindet, einen Fuß aufweist, der radial nach innen gedreht ist, der in der runden Leitung (4), die mit dem Führungsdrehpunkt (26) endet, übersteht, wobei das vordere Gelenk (24) der Schubstange (20) radial nach außen von diesem Führungsdrehpunkt angeordnet ist, wenn die Umkehrvorrichtung geschlossen ist.

4. Schubumkehrvorrichtung nach Anspruch 2 oder 3, **dadurch gekennzeichnet, dass** das hintere Gelenk (22) der Schubstange (20) auf einem Träger (32) fixiert ist, der sich von der Verkleidung (10) durch eine radiale Bewegung auf die Außenseite dieser Verkleidung trennen kann.

5. Schubumkehrvorrichtung nach Anspruch 4, **dadurch gekennzeichnet, dass** der Träger (32) mit der Verkleidung (10) durch einen radial angeordneten Positionierungszapfen (30) verbunden ist, der sich in einen entsprechenden Hohlraum schiebt.

6. Schubumkehrvorrichtung nach Anspruch 4, **dadurch gekennzeichnet, dass** die Verbindung zwischen dem Träger (32) und der Verkleidung (10) ein radial gleitendes Schiebersystem aufweist, das bei der Öffnung der Verkleidung ständig einen Kontakt zwischen diesen zwei Elementen aufrecht erhält.

7. Schubumkehrvorrichtung nach einem der vorhergehenden Ansprüche, **dadurch gekennzeichnet, dass** der vordere Rahmen (2) Dichtungen (28) über und unter dem Durchgang der Kaskaden (12) aufweist, die nach hinten gedreht sind, die die Auflage der entsprechenden ebenen Seiten aufnehmen, die an diese Kaskaden fixiert sind, wenn die Schubumkehrvorrichtung geschlossen ist.

8. Schubumkehrvorrichtung nach einem der vorhergehenden Ansprüche, **dadurch gekennzeichnet, dass** das Betätigungssystem zwei verschiedene Wege der Verkleidung (10) und der Kaskaden (12) durchführt, die proportional sind.

9. Schubumkehrvorrichtung nach Anspruch 8, **dadurch gekennzeichnet, dass** das Betätigungssystem zwei mechanische Hebeelemente vom Typ Schraube-Schraubenmutter (54, 56) aufweist, die zwei verschiedene Wege ausgehend von einem Antrieb durch eine gleiche Motorisierung (40) ergeben.

10. Schubumkehrvorrichtung nach Anspruch 9, **dadurch gekennzeichnet, dass** das Betätigungssystem eine motorisierte Welle (40) aufweist, die zwei Paar Kegelritzen (42) antreibt, die jeweils eine Schraube (44) der zwei Hebeelemente (54, 56), die parallel angeordnet sind, drehen lassen.

11. Schubumkehrvorrichtung nach Anspruch 9, **dadurch gekennzeichnet, dass** das Betätigungssystem zwei konzentrische mechanische Hebeelemente (60) aufweist, die eine gleiche Schraube (44) umfassen, die über ein äußeres Gewinde und ein inneres Gewinde in einer Bohrung verfügt, um jedes Hebeelement zu betätigen.

12. Schubumkehrvorrichtung nach einem der vorhergehenden Ansprüche, **dadurch gekennzeichnet, dass** er eine Motorisierung aufweist, die mehrere Betätigungssysteme, die auf dem Umfang der Gondel verteilt sind, durch eine flexible Welle (40) antreibt.

13. Turbostrahltriebwerksgondel, die über eine Schubumkehrvorrichtung verfügt, **dadurch gekennzeichnet, dass** diese Umkehrvorrichtung nach einem der vorhergehenden Ansprüche durchgeführt ist.

## Claims

1. A thrust reverser of a turbojet engine nacelle, comprising movable cowls (10) which retract relative to a front frame (2) under the effect of an actuation system, by causing through a control mechanism the tilting of flaps (8) to substantially close the annular cold air flow path (4), and by opening cascades (12) disposed around this flow path which receive the cold air flow to return it forwards, the thrust reverser being closed, the cascades (12) are partially integrated in the cowls (10), and the thrust reverser including an actuation system which makes the cascades retract along a reduced stroke relative to that of the cowl, **characterized in that** each flap (8) is connected to the cascades (12) via a guide pivot (26).

2. The thrust reverser according to claim 1, **characterized in that** each flap (8) is connected to a cowl (10) through a tie rod (20) comprising hinges (22, 24) at its ends.

3. The thrust reverser according to claim 2, **characterized in that** the cascade (12) located above a flap (8), includes a leg turned radially inwards which protrudes into the annular flow path (4), ended by the guide pivot (26), the front hinge (24) of the tie rod (20) being disposed radially outwards of this guide pivot when the thrust reverser is closed.

4. The thrust reverser according to claim 2 or 3, **characterized in that** the rear hinge (22) of the tie rod (20) is fastened on a support (32) which may be separated from the cowl (10) by a radial movement outwards of this cowl.

5. The thrust reverser according to claim 4, **characterized in that** the support (32) is linked to the cowl (10) by a positioning stud (30) disposed radially, which fits into a corresponding recess.

6. The thrust reverser according to claim 4, **characterized in that** the linkage between the support (32) and the cowl (10) includes a system of slides sliding radially, which permanently maintains a contact between these two elements during the opening of the cowl.

7. The thrust reverser according to any one of the preceding claims, **characterized in that** the front frame (2) includes sealing gaskets (28) above and below the passage of the cascades (12), turned rearwards, which receive the support of corresponding planar faces fastened to these cascades when the thrust reverser is closed.

8. The thrust reverser according to any one of the preceding claims, **characterized in that** the actuation system performs two different strokes of the cowl (10) and of the cascades (12) which are proportional to each other.

9. The thrust reverser according to claim 8, **characterized in that** the actuation system includes two mechanical cylinders of the screw-and-nut type (54, 56), which give two different strokes when driven by a same motorization (40).

10. The thrust reverser according to claim 9, **characterized in that** the actuation system includes a motorized shaft (40) driving two pairs of bevel pinions (42), which rotate each a screw (44) of the two cylinders (54, 56) disposed parallel to each other.

11. The thrust reverser according to claim 9, **characterized in that** the actuation system includes two concentric mechanical cylinders (60), comprising a same screw (44) provided with an external threading and with an internal threading in a bore, to actuate each cylinder.

12. The thrust reverser according to any one of the preceding claims, **characterized in that** it includes a motorization driving several actuation systems distributed over the perimeter of the nacelle, by a flexible shaft (40).

13. A turbojet engine nacelle provided with a thrust reverser, **characterized in that** this thrust reverser is made according to any one of the preceding claims.
